**Europäisches Patentamt**

**European Patent Office**

**Office européen des brevets**

(19)

(11) Veröffentlichungsnummer: **0 011 816**
**B1**

(12)

# EUROPÄISCHE PATENTSCHRIFT

(45) Veröffentlichungstag der Patentschrift:
23.06.82

(21) Anmeldenummer: **79104626.1**

(22) Anmeldetag: **21.11.79**

(51) Int. Cl.³: **B 60 N 1/00,** A 47 C 7/42

(54) **Rückenlehne mit einem belüfteten Rückenpolster für Autositze.**

(30) Priorität: **29.11.78 DE 7835372 U**

(43) Veröffentlichungstag der Anmeldung:
**11.06.80 Patentblatt 80/12**

(45) Bekanntmachung des Hinweises auf die Patenterteilung:
**23.06.82 Patentblatt 82/25**

(84) Benannte Vertragsstaaten:
**AT BE CH FR GB IT NL SE**

(56) Entgegenhaltungen:
**DE-A-2 136 947**
**FR-A-1 353 796**
**FR-A-1 551 905**
**FR-A-1 569 841**
**FR-A-2 147 729**

(73) Patentinhaber: **METZELER SCHAUM GMBH,**
**Donaustrasse 51, D-8940 Memmingen (DE)**

(72) Erfinder: **Schmidt, Falk, Benninger Strasse 26,**
**D-8940 Memmingen (DE)**

(74) Vertreter: **Michelis, Theodor, Dipl.-Ing.,**
**Westendstrasse 131, D-8000 München 2 (DE)**

## Rückenlehne mit einem belüfteten Rückenpolster für Autositze

Die Erfindung betrifft eine Rückenlehne für einen Kraftfahrzeugsitz mit einem Rückenpolster aus Schaumstoff, in das im Lendenwirbelbereich vertikal verlaufende Nuten und von diesen ausgehende Durchbrüche eingearbeitet sind.

Ein derartiges Rückenpolster ist aus der FR-A-2 147 729 bekannt. Dabei sind in die Sitzseite des Rückenpolsters Vertiefungsnuten in vertikaler und horizontaler Richtung eingeschnitten, von denen aus einzelne Durchbrüche durch das Polster zur Belüftung ausgehen. Diese Nuten weisen jedoch nur eine geringe Tiefe auf, so daß die Gefahr besteht, daß die zwischen den Nuten stehenbleibenden Schaumstoffbereiche des Rückenpolsters so weit zusammengedrückt werden, daß die Nuten praktisch verschwinden und der Belüftungseffekt dadurch aufgehoben wird.

Demgegenüber liegt der vorliegenden Erfindung die Aufgabe zugrunde, ein Rückenpolster zu schaffen, bei dem auch bei längeren Fahrten der zwischen dem Rücken des Fahrers und der Rückenlehne auftretende Luftstau vermieden und demgegenüber eine einwandfreie Belüftung des Rückenpolsters gewährleistet und die sich stauende Luft selbsttätig ausgetauscht wird.

Zur Lösung dieser Aufgabe ist erfindungsgemäß vorgesehen, daß die Nuten im Längsschnitt bis ins Innere des Rückenpolsters reichen und etwa die Form einer Hystereseschleife aufweisen.

Bei einer derartigen Ausgestaltung der Nuten ist sichergestellt, daß in diese Nuten stets eine Luftzirkulation stattfindet, wobei diese Zirkulation durch die Pumpbewegung der auf dem Polster sitzende Person zusätzlich unterstützt wird. Das sich in den Nuten befindliche Luftpolster wird dabei durch die Durchbrüche ständig erneuert, so daß seine relative Luftfeuchte stets unter dem Taupunkt liegt. Der Fahrer schwitzt nicht, fühlt sich wohl und kann mit erhöhter Aufmerksamkeit dem Verkehrsgeschehen folgen.

Anhand einer schematischen Zeichnung ist ein Ausführungsbeispiel nach der Erfindung näher erläutert. Dabei zeigt

Fig. 1 die perspektivische Darstellung eines derartigen Rückenpolsters, und

Fig. 2 einen Längsschnitt durch ein entsprechendes Rückenpolster im Bereich einer Nut.

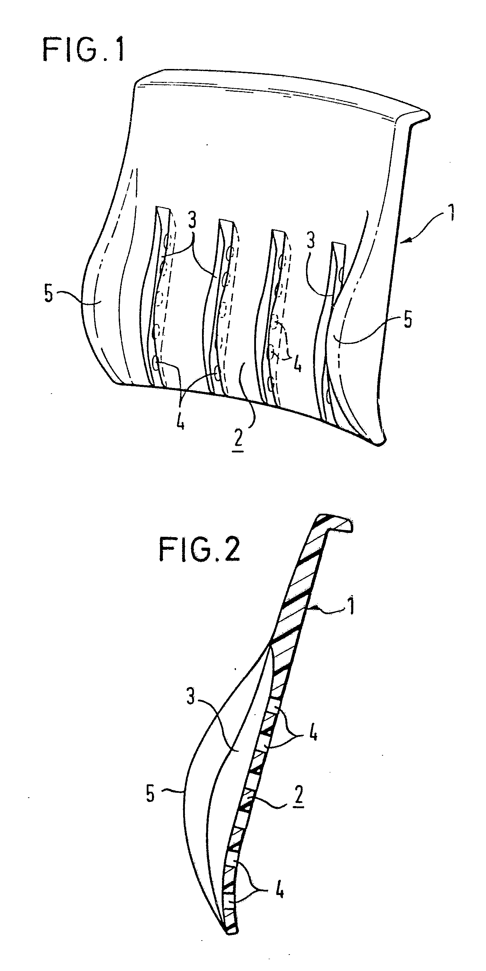

Fig. 1 zeigt ein Rückenpolster 1 für eine nicht dargestellte Rückenlehne eines Autositzes. Dieses Rückenpolster 1 ist im Lendenwirbelbereich 2 anatomisch geformt, d. h. mit seitlichen Stützpolstern 5 versehen. In der Mitte des Lendenwirbelbereichs 2 sind dabei vertikal verlaufende Nuten 3 vorgesehen, die im Längsschnitt gesehen ins Innere des Rückenpolsters 1 reichen und etwa die Form einer Hystereseschleife aufweisen. Vertikal zu diesen Nuten 3 und von diesen ausgehend sind etwa kreisrunde Durchbrüche 4 vorgesehen, die die Vorderseite und die Rückseite des Rückenpolsters 1 miteinander verbinden. Die Durchbrüche 4 können auch in den einzelnen Nuten 3 versetzt zueinander angeordnet sein. Durch diese Durchbrüche 4 ist ein ständiger Luftaustausch innerhalb der Nuten 3 sicher gewährleistet, die durch die Bewegung des Fahrers noch zusätzlich unterstützt wird.

Das Rückenpolster 1 besteht dabei zweckmäßigerweise aus einem formgeschäumten PUR-Weichschaumteil mit den Nuten 3 und den Durchbrüchen 4, die ggf. auch nachträglich eingefräst werden können.

## Patentanspruch

Rückenlehne für einen Kraftfahrzeugsitz mit einem Rückenpolster (1) aus Schaumstoff, in das im Lendenwirbelbereich (2) vertikal verlaufende Nuten (3) und von diesen ausgehende Durchbrüche (4) eingearbeitet sind, dadurch gekennzeichnet, daß die Nuten (3) bis ins Innere des Rückenpolsters (1) reichen und im Längsschnitt etwa die Form einer Hystereseschleife aufweisen.

## Claim

A back for a motor vehicle seat comprising a cushion (1) made of foam, into which are worked vertically extending grooves (3) and openings (4) emanating from the grooves, in the region of the lumbar vertebra (2), characterised in that the grooves (3) extend inside the cushion (1) and, in longitudinal section are generally in the shape of a hysteresis loop.

## Revendication

Dossier de siège de véhicule automobile ayant un coussin (1) de dossier ventilé en matériau mousse, dans lequel des gorges verticales et des passages issus de celles-ci sont ménagés dans la région (2) lombaire de refoulement de l'air, caractérisé en ce que les gorges (3) vont jusqu'à l'intérieur du coussin (1) de dossier et présentent, en coupe longitudinale, à peu près la forme d'un cycle d'hystérésis.

FIG.1

FIG.2